# EUROPEAN PATENT APPLICATION

(11) **EP 1 619 657 A2**
(43) Date of publication of application: **25.01.2006**
(21) Application number: 05016002.7
(22) Date of filing: 22.07.2005
(51) Int. Cl.: G09G 5/00

(54) **Image display system and image display method**

(30) Priority: 23.07.2004 JP 2004215743
(71) Applicant: Pioneer Corporation, Meguro-ku, Tokyo (JP)
(72) Inventor: Kanda, Masao, 15-5, Ohmorinishi 4-chome Ohta-ku Tokyo (JP)
(74) Representative: Viering, Jentschura & Partner

(57) **Abstract**

In an image display system (10), if someone in a human detection area (300a) in a portion around a display apparatus (200) is detected by a human detection sensor (300), a control device (110) of an image reproducing apparatus (100) allows the display apparatus to display an image based on still image data 121 or motion picture data 122. If a predetermined period elapses in which the detected person predictably goes away from the human detection area 300a, the control device allows the display device 210 to display a different image from the previously displayed image.

## Description

### BACKGROUND OF THE INVENTION

### 1. Field of the Invention

The present invention relates to an image display system and an image display method, which are preferable in displaying an advertisement or the like, for example.

### 2. Description of the Related Art

An image display system constructed for power saving has been suggested (e.g. refer to Japanese Patent Application Laid Open NO. Hei 7-44144).

According to a display power saving apparatus disclosed in Japanese Patent Application Laid Open NO. Hei 7-44144 (hereinafter referred to as a related art), it is provided with: a detecting device for detecting whether there is someone within a certain distance from the front of a display; and an on-off device for switching on or off the display apparatus itself on the basis of information from the detection device. It discloses that due to the detecting device and the on-off device, the power can be saved by switching off the display apparatus when there is no one within the certain distance in which the display apparatus is predictably not used.

The related art, however, has the following problems.

For example, in the case where the related art is used for advertising display or the like in town with many people, if the display is switched on or off every time the presence of a person is detected, it is an eyesore. At the same time, by the time a screen is displayed on the display, the person will pass through, to some extent, so that the effective advertising display is difficult. Moreover, if the person completely passes through by the time the screen is displayed on the display, it is difficult for the person to even recognize that an advertisement is there. Namely, in the related art, it is technically difficult to combine the power saving and the effective advertising display.

### SUMMARY OF THE INVENTION

It is therefore an object of the present invention to provide an image display system and an image display method having a high advertising effect while reducing power consumption.

### <Image Display System>

The above object of the present invention can be achieved by an image display system, provided with: a displaying device which has a display screen; a detecting device for detecting presence of a person in a portion around the displaying device; and a display controlling device for controlling the display device so as to display a first image on the display screen only for a predetermined display period if the presence of the person is detected by the detecting device, and to display a second image, which is different from the first image, on the display screen in at least one portion of period other than the predetermined display period.

According to the image display system of the present invention, in operation thereof, the image is displayed on the display screen of the displaying device.

The "image" of the present invention includes a still image, a motion picture (or animation), a text image, and the like. The image is defined as visual information which can have some effect on at least the person who is in the portion around the displaying device. For example, it indicates: publicity related to a product, a shop, a service, a movie, an event, entertainment or the like; information having high immediacy, such as topical information and news; or a scenery image and a geometry image which can exert some mental effect, such as a healing effect.

Moreover, the "displaying device" of the present invention includes various display apparatuses, such as a liquid crystal display (LCD), a plasma display, an organic electroluminescence (EL) display, and a Cathode Ray Tube (CRT) display and the like. Furthermore, it includes some device for displaying the image on the various display apparatuses; for example, it includes all or a part of the image reproducing apparatus and the system in which a DVD-ROM, a DVD-RAM, a CD-ROM, a CD-RW, a HD, or the like is used as a recording device. The "display screen" provided for this displaying device corresponds to various display panels or screens of the various display apparatuses.

On the other hand, according to the image display system of the present invention, the presence of the person in the portion around the displaying device is detected by the detecting device. Typically, the "portion around the displaying device" indicates a space within a distance from the displaying device where the display screen can be visually recognized in a range of common sense. However, the distance from the displaying device is not strictly defined as a physical, numerical value. The distance may be determined, at each time, as a range in which it is desired to positively allow the person who is in the "surrounding portion" to visually recognize the image displayed on the display screen. For example, if the size of the display screen varies, the size of the image to be displayed also relatively varies, and in general, a visually recognizable distance also varies, naturally. If the visually recognizable distance is long, the area defined as the "surrounding portion" may be large by that much.

The "detecting device" of the present invention is a device capable of detecting such presence of the person. For example, existing or known various sensor apparatuses are preferably used, such as an infrared sensor like a pyroelectric sensor, an ultrasonic sensor, a photo coupler and the like. In general, the detecting device detects the motion of the person, or the moving person; however, it may detect the presence of the person (regardless of its stationary state), by comparing it with a reference state in which there is no one. Moreover, the detecting device may use an image recognition technology, to thereby distinguish and detect the presence of the person and the presence of a body other than the person. Incidentally, there is no limitation in the aspect of the detecting device, as long as capable of detecting the presence (or the presence and/or absence) of the person in the portion around the displaying device.

In particular, a publicity effect or advertising effect can be hardly expected even if the image is displayed on the displaying device in such a situation that there is no one in the portion around the displaying device. Thus, it is not preferable from the viewpoint of the reduction of power consumption. However, the on-off control of the power supply, as in the related art, impairs the above-mentioned function as the publicity or advertisement.

Therefore, the image display system of the present invention solves the problem by that the displaying device changes the image to be displayed on the display screen, depending on whether or not there is someone in the portion around the displaying device. More specifically, the display controlling device controls the display device so as to display the first image on the display screen only for the predetermined display period if the presence of the person in the portion around the displaying device is detected by the detecting device, and to display the second image, which is different from the first image, on the display screen in at least one portion of period other than the predetermined display period.

The "first image" is some type of image defined by the conception of the "image" of the present invention, as described above. For example, it is an image for publicity or advertisement. If there is someone in the portion around the displaying device, the first image is provided for the person.

The "second image" is an image different from the first image. The second image, however, is not depart from the range of the "image" of the present invention, and is the image consistently defined in the range. For example, the second image is an image to the extent that allows a passer-by or the like to visually recognize that an image about the publicity or advertisement is displayed on the display screen, or that the display screen for the publicity or advertisement exists there.

Moreover, the displaying device is controlled by the display controlling device to display the "first image" on the display screen" if the presence of the person is detected". "If the presence of the person is detected" is not limited to an exact time point when the detection is performed. Namely, it widely includes substantially the same time point as the exact time point when the presence of the person is detected, or a time point after a predetermined time length elapses from the detection time point, and the like. For example, if the detecting device is placed at a certain distance away from the displaying device, the first image may be displayed on the display screen after a time length elapses in which it can be considered that the detected person moves from the position of the detection to a neighborhood of the displaying device.

The "predetermined display period" of the present invention is not necessarily a period in which the presence of the person is detected in the portion around the displaying device. For example, it may be a predetermined certain time length. If a time length in which the person stays in the surrounding space, from the presence of the person is detected in the surrounding of the displaying device, can be predicted or estimated in advance, the predetermined display period may be set to the above-mentioned time length. In particular, although it depends on the performance of the detecting device of the present invention, some of the detecting device cannot detect whether or not the person remains stationary (e.g. is sitting) in the surrounding of the displaying device even if capable of detecting the person approaching to the displaying device. However, if the predetermined period is set in response to the above-mentioned case, it is extremely useful.

Alternatively, if the first image is one portion of some content or a chapter in the content, the "predetermined display period" may be a division or segment of the content or the chapter. For example, if the first image is an about several-tens-second-long image, such as a commercial image of a product, this commercial image may be displayed for one time at minimum.

As described above, even if there is no one in the portion around the displaying device in the present invention, some image is displayed on the displaying device. Namely, the first image can be easily displayed, immediately, on the displaying device side. Therefore, if the presence of the person in the portion around the displaying device is detected by the detecting device, it is possible to display the image to be originally displayed (i.e. the first image), quickly. Moreover, in the present invention, it is possible to arbitrarily set the display content and the display format of the second image as long as it is different from the first image. For example, it is possible to easily reduce the power consumption, extend the lifetime of the screen, or improve the advertising effect, by setting the second image to an image in which the power consumption is less, to an image which causes less deterioration of the display screen, or to an image which has a higher attractive effect of attracting the person, as compared to the first image. Thus, it is possible to realize the high advertising effect while reducing the power consumption. In the present invention, "the power consumption is reduced" widely includes not only that the power consumption is clearly reduced, but also that the power consumption is at least maintained without increase, as compared to the case where the first image and the second image are not changed at all.

Even if it is said that there is no one in the portion around the displaying device, that is merely the detecting device, e.g. a sensor, does not detect the presence. In some cases, that may be different from whether or not there is actually someone in the portion around the displaying device, exactly. Even in that case, according to the image display system of the present invention, it is possible to provide some information for the periphery, and it is extremely rare to cause a disadvantage of missing opportunities.

In one aspect of the image display system of the present invention, the displaying device includes: an image signal generating device for generating an image signal; and a display screen device, which has the display screen, for displaying the first or second image on the display screen, on the basis of the generated image signal, the display controlling device controls at least one of the image signal generating device and the display screen device to display the second image in the at least one portion of period.

According to this aspect, the display controlling device controls at least one of the image signal generating device and the display screen device.

The "image signal" of the present invention indicates a signal supplied to the display screen device in order to display the image of the present invention on the display screen. Moreover, the "image signal generating device" is an apparatus capable of generating such an image signal. It indicates a computer apparatus, such as a personal computer, a workstation, and a server apparatus. Alternatively, it indicates VTR playback equipment, LD playback equipment, and various reproducing apparatuses for a DVD-ROM, a DVD-RAM, a CD-ROM, a CD-RW, or the like, for generating the image signal on the basis of image data recorded on various recording media, such as a video tape, a LD, a DVD-ROM, a DVD-RAM, a CD-ROM, and a CD-RW.

Moreover, the "display screen device" of the present invention corresponds to various display apparatuses, such as a liquid crystal display apparatus, a plasma display, an organic EL display, and a CRT display, for example.

The display controlling device for changing the display between the first image and the second image may be mounted in the same hardware as that of the image signal generating device, or may be mounted in the same hardware as that of the display screen device. Alternatively, it may be mounted in the same hardware as that of the detecting device. All or at least a part of the image signal generating device, the display screen device, and the detecting device may be mounted in the same hardware.

According to this aspect, it is possible to display the image on the display screen and to change the display between the first image and the second image, relatively easily, so that it is preferable.

In another aspect of the image display system of the present invention, the second image is an image in which power consumption is less than the first image.

Here, the image "in which power consumption is less" indicates an image in which it is found out that the power consumption of the image display system can be reduced more, regardless of the amount of consumption, than the case where the first image is displayed on the display screen. For example, it is an image having a smaller display area than that of the first image, an image display having a less processing load related to the display, and the like. Alternatively, it indicates an image predicted or estimated in advance by various methods, such as an experimental, experiential or simulation method, or the like. For example, it indicates an image in which the image displayed on the whole display screen is reduced in scale with the same image in terms of content, or if the first image is a motion picture, it indicates a still image related one scene of the motion picture. Moreover, it may be an image which flashes or which repeats extinction and lighting in a relatively short cycle.

Alternatively, the image "in which power consumption is less" may be of a type which can be obtained by changing a factor, such as the brightness or contrast of the display screen. Namely, the second image of the present invention may be the same image in terms of content as the first image, as long as it can reduce the power consumption more than the first image does.

According to this aspect, it is possible to clearly reduce the power consumption by the second image in which the power consumption is less than the first image.

In another aspect of the image display system of the present invention, the second image is an image which causes less deterioration of the display screen than the first image does.

According to this aspect, the second image is an image which causes less deterioration of the display screen than the first image does, so that it is possible to extend the lifetime of the display screen, and eventually, the lifetime of the displaying device. Here, the "deterioration of the display screen" indicates a decrease in the display quality of the display screen which is caused over time by burn-in, for example.

Therefore, the "image causes less deterioration of the display screen" indicates an image in which the burn-in is difficult to occur, i.e., a dark image, an image with less stationary part which is relatively bright, a flashing (or blinking) image, or the first image displayed in such a condition that the brightness and the contrast of the display screen etc. are relatively low, and the like.

Incidentally, if the second image is darker than the first image, it is possible to give a relatively large impact on the person in the portion around the displaying device, at the moment when it is changed to the first image which is relatively bright. Moreover, it is possible to display the image having an extremely high appeal, so that it is effective.

In one aspect of the image display system in which the second image causes less deterioration of the display screen, the display controlling device controls the display device to reduce brightness of the display screen when the second image is displayed.

The first image and the second image may be totally different. However, as in this aspect, it is possible to obtain the second image by reducing the brightness of the display screen. In this case, it is possible to set the second image to be an image equal to the first image in terms of the content. Therefore, the processing related to the display processing becomes remarkably light in load, and it is efficient.

Incidentally, if the displaying device has an interface for controlling the brightness of the display screen, the brightness control of the display screen, as described above, may be electrically or physically performed through the interface. Moreover, the control is performed, regardless of a wire or wireless form. For example, a signal from the detecting device may be inputted to the displaying device through a wireless section, at least partially, by a device which uses infrared rays, such as a remote control.

In another aspect of the image display system of the present invention, the second image has a higher attractive effect of attracting the person than the first image.

Here, the "image having a higher attractive effect of attracting the person" indicates an image brighter than the first image, a flashing image, an image in which the first image is reduced in size and displaced on the screen, or the like. It may be an image derived from the first image, or may be an exclusive image set in advance. If the power consumption is to be increased when the second image is brighter than the first image, the power consumption may be reduced, by combining the above-mentioned various forms to thereby make a bright and flashing image. Namely, as long as the effect of the present invention can be ensured, the form of the "image having a higher attractive effect of attracting the person" may be arbitrarily determined.

According to this aspect, it is possible to easily realize the extremely high advertising effect by the second image having the higher attractive effect of attracting the person than that of the first image.

In another aspect of the image display system of the present invention, the display controlling device extends the predetermined display period if the presence of a person is newly detected by the detecting device in the predetermined display period.

For example, it is assumed that the first image is displayed simply by a unit of the predetermined period on crossings or in shops with many people. The content displayed on the display screen easily becomes unnatural if the presence of many people is continuously detected by the detecting device.

According to this aspect, if the detecting device detects the presence of the person in the predetermined display period, the display controlling device extends the display period of the first image. This reduces such unnaturalness and allows the effective display of the image to be performed with respect to the person in the portion around the displaying device. Incidentally, the aspect of "extension" may be arbitrarily performed. For example, a time length corresponding to the predetermined display period may be extended from a timing point when the presence of the person is detected at last.

In another aspect of the image display system of the present invention, the image display system further is provided with a first storing device for storing image data related to the image signal in advance, and the image signal generating device generates the image signal on the basis of the image data stored in advance.

According to this aspect, the image data related to the first and second images is stored in the first storing device in advance. Therefore, the image signal generating device can obtain the image data from the first storing device, as occasion demands, and can generate the image signal to be supplied to the displaying device. Thus, it is possible to easily increase the variation of the display onto the display screen.

Incidentally, the "image data" of the present invention is source data for displaying the image of the present invention on the display screen. It indicates analog or digital image data related to a still image, a motion picture, a text image, or the like. Therefore, the first storing device can adopt various aspects, such as a video tape, a LD, a HD, a DVD-ROM, a DVD-RAM, a CD-ROM, and a CD-RW.

In the present invention, the "image signal" and the "image data" mutually correspond, one to one, or multiple to one. Therefore, a plurality of types of image signals may be generated from one image data. For example, both the image signal related to the first image and the image signal related to the second image may be generated from one image data, by the image signal generating device. In this case, the image signal related to the second image may be an image signal obtained by uniformly reducing the brightness level of each color of RGB (red-green-blue) more than that of the image signal related to the first image. Alternatively, the image signal related to the second image may be an image generated from one portion of the one image data so as to display one portion of the first image.

On the other hand, the first image and the second image may be generated from mutually different image data. At this time, the display controlling device may supply the mutually different image data from the first storing device to the image signal generating device, depending on which image to display. Even in this case, the display controlling device controls the image signal generating device to generate the image signal from the different image data. Thus, this is included in the range of "controlling the displaying device".

In another aspect of the image display system of the present invention, the image display system is further provided with a second storing device for storing a detection result of the detecting device.

According to this aspect, the detection result by the detecting device is stored into the second storing device. Here, the second storing device may be a storage medium which is the same as or the same type of the above-mentioned first storing device. By storing the detection result by the detecting device, as described above, it is possible to find out the presence density, the frequency, the number or the like of people in the surrounding of the displaying device, relatively easily. Moreover, if the detecting device can detect the presence of the person by various categories, such as time zone, sex, and place, the detection result may be stored by such various categories. Furthermore, it is also easy to change the first image and the second image to have the appropriate content, in accordance with the setting location of the displaying device, the time zone or the like, as occasion demands, on the basis of the stored detection result. It is also possible to easily realize the high advertising effect.

In one aspect of the image display system having the first storing device, the first storing device is accommodated in a network and mounted in a server which can be communicated through the network, the image signal generating device is accommodated in the network and is mounted in a client which can be communicated with the server through the network, the server transmits the stored image data through the network, the client receives the transmitted image data, and the image signal generating device generates the image signal on the basis of the received image data.

According to this aspect, the first storing device is mounted in the server, and the image signal generating device is mounted in the client. This improves the setting of the client. Moreover, the server can be easily provided with the relatively large capacity storage medium. Locating the first storing device in the server causes the types of the first image and the second image to be increased, so that it is possible to further improve the advertising effect.

In one aspect of the image display system having the second storing device, the second storing device is accommodated in the network and is mounted in the server which can be communicated through the network, the detecting device is accommodated in the network and is mounted in the client which can be communicated with the server through the network, the client transmits the detection result through the network, the server receives the transmitted detection result, and the second storing device stores therein the received detection result.

According to this aspect, the second storing device is mounted in the server, and the detecting device is mounted in the client. The detection result by the detecting device is transmitted to the server from the client, and is stored by the second storing deice. Therefore, it is possible to recognize the presence state of the person in the portion around the displaying device, in real time on the server side. In this case, it is also possible to easily recognize each of the presence states of people in the surrounding portions of the displaying devices which are located in a plurality of places, through the server related to an advertiser. Therefore, according to this aspect, it is possible to display the image, extremely efficiently.

### < Image Display Method>

The above object of the present invention can be also achieved by an image display method, provided with: a detecting process of detecting presence of a person in a portion around a displaying device having a display screen; a first controlling process of controlling the display device so as to display a first image on the display screen only for a predetermined display period if the presence of the person is detected by the detecting process; and a second controlling process of controlling the display device so as to display a second image, which is different from the first image, on the display screen in at least one portion of period other than the predetermined display period.

According to the image display method of the present invention, it is possible to easily realize the image display system by providing the various processes corresponding to the above-mentioned image display system.

As explained above, according to the image display system of the present invention, it is provided with: the displaying device; the detecting device; and the display controlling device. Thus, it is possible to perform the effective advertising display while reducing the power consumption. According to the image display method of the present invention, it is provided with: the detecting process; the first controlling process; and the second controlling device. Thus, it is possible to easily realize the image display system of the present invention.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a conceptual diagram showing an image display system in an embodiment of the present invention;
FIG. 2 is a block diagram showing the image display system in the embodiment of the present invention;
FIG. 3 is a schematic diagram showing image display timing in displaying a still image in the image display system in FIG. 2;
FIG. 4 is an illustration showing the still image in the image display system in FIG. 2;
FIG. 5A and FIG. 5B are other illustrations showing the still image in the image display system in FIG. 2;
FIG. 6 is a schematic diagram showing image display timing in displaying a motion picture (or an animation) in the image display system in FIG. 2;
FIG. 7 is a block diagram showing an image display system in a first modified example of the present invention; and
FIG. 8 is a block diagram showing an image display system in a second modified example of the present invention.

### DETAILED DESCRIPTION OF THE PREFERRED EMBODIMENT

The preferred embodiment of the present invention will be explained with reference to the drawings.

### <Structure in Embodiment>

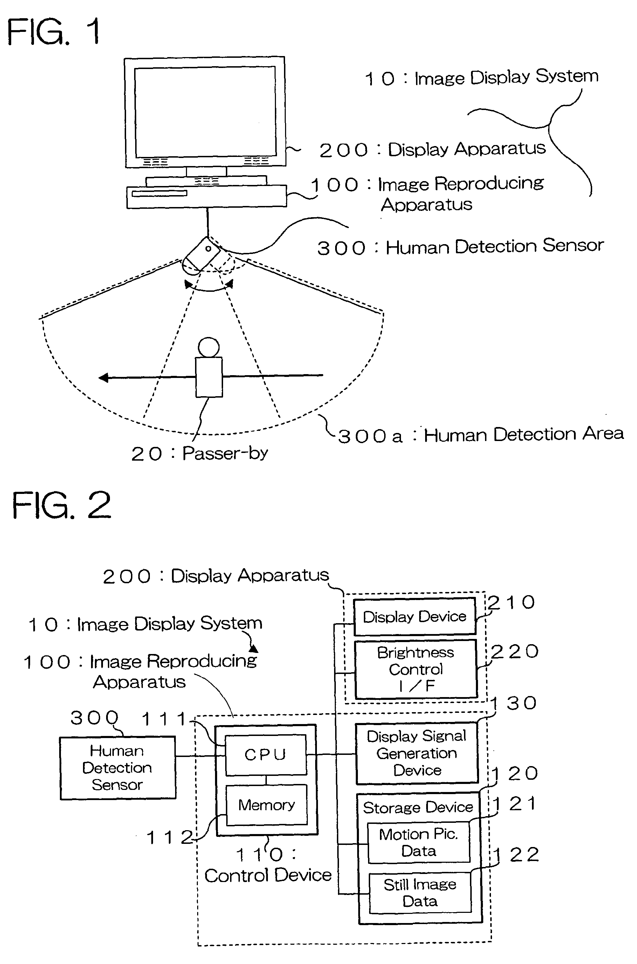

At first, with reference to FIG. 1, the outline of an image display system in the embodiment of the present invention will be explained. FIG. 1 is a conceptual diagram showing an image display system 10.

In FIG. 1, the image display system 10 is provided with: an image reproducing apparatus 100; a display apparatus 200; and a human detection sensor 300.

The display apparatus 200 is mounted in various places, regardless of inside and outside, where people can visually recognize it, such as on a crossing, on a pedestrian mall (i.e. streets closed to vehicles), at a park, in a station, on the platform of a station, at the front desk of a company, on the roof of a building, and somewhere with many people.

The image reproducing apparatus 100 is electrically connected to the display apparatus 200, and is intended to display an image on the display apparatus 200.

The human detection sensor 300 is electrically connected to the display apparatus 200, and can detect the presence of a person around the display apparatus 200. The human detection sensor 300 rotates in a direction of an arrow (a curved line), to thereby form a human detection area 300a around the display apparatus 200. Namely, the human detection sensor 300 is a sensor for detecting a person who is in the human detection area 300a. Incidentally, the human detection area 300a can adopt various aspects in the size, the shape of the area, or the like, depending on where to set the image display system 10, the type of the display apparatus 200, the purpose of the image display, and the performance of the human detection sensor 300.

The image display system 10 changes an image to be displayed on the display apparatus 200, depending on the detection result of the human detection sensor 300. The image display system 10 is a system for displaying an advertisement, with respect to a single or a plurality of passer-bys 20 who pass through the human detection area 300a, for example.

Then, with reference to FIG. 2, the structure of the image display system 10 will be explained. FIG. 2 is a block diagram showing the image display system 10.

In FIG. 2, the image reproducing apparatus 100 is provided with; a control device 110; a storage device 120; and a display signal generation device 130.

The control device 110 is provided with: a Central Processing Unit (CPU) 111; and a memory 112. The CPU 111 is a unit for controlling the operation of the image reproducing apparatus 100, and functions as one example of the "display controlling device" of the present invention. The memory 112 is, for example, a Random Access Memory (RAM), and is a storage medium which can temporarily store therein data in the operational process of the image reproducing apparatus 100.

The storage device 120 is a storage medium for storing therein image data about an image which is displayed on the display apparatus 200. The storage device 120 is one example of the "first storing device" of the present invention. The storage device 120 is provided with: an optical information recording medium, such as a DVD-ROM, a DVD-RAM, a CD-ROM, and a CD-RW; and a drive unit thereof. In the storage device 120, there are previously stored two types of digital image data, which are still image data 121 and motion picture data 122. The still image data 121 is associated with the guidance image or publicity image of a new product which belongs to various genres or categories, a new service, an event, and a movie, or the like. The motion picture data 122 is associated with the above-mentioned guidance image or publicity image. Incidentally, the storage device 120 stores therein a plurality of still image data 121 and a plurality of motion picture data 122.

The display signal generation device 130 can generate a display signal to be displayed on a display device 210, as described later, from the above-mentioned still image or motion picture data stored in the storage device 120. The display signal generation device 130 is one example of the "image signal generating device" of the present invention.

The display apparatus 200 is provided with: the display device 210; and a brightness control interface (I/F) 220. The display apparatus 200 is one example of the "display screen device" of the present invention. The display apparatus 200 is a relatively large display apparatus, such as a plasma display apparatus, a liquid crystal display apparatus, a CRT (Cathode Ray Tube) display apparatus, and an organic electroluminescence display apparatus. The above-mentioned passer-by 20 can fully recognize the displayed image on the display apparatus 200, while passing through the human detection area 300a.

The display device 210 is a display panel, such as a plasma display panel, for example, corresponding to the structure of the display apparatus 200. The display device 210 is the display screen of the image to be visually recognized by the passer-by 20. Namely, the display device 210 is one example of the "display screen" of the present invention.

The brightness control interface 220 is intended to control the brightness of the display device 210. In accordance with a brightness control signal inputted to the brightness control interface 220, the brightness of the display device 210 is changed on the display apparatus 200.

The image reproducing apparatus 100 and the display apparatus 200 constitute one example of the "displaying device" of the present invention.

The human detection sensor 300 can detect the presence of a person, such as the passer-by 20 who passes through the human detection area 300a. The human detection sensor 300 is one example of the "detecting device" of the present invention. The human detection sensor 300 is an infrared sensor, for example. If the passer-by 20 enters the human detection area 300a, the human detection sensor 300 outputs a detection pulse signal for indicating that the presence of a person is detected, to the control device 110.

### <Operation in Embodiment>

### <A: Display of Still Image>

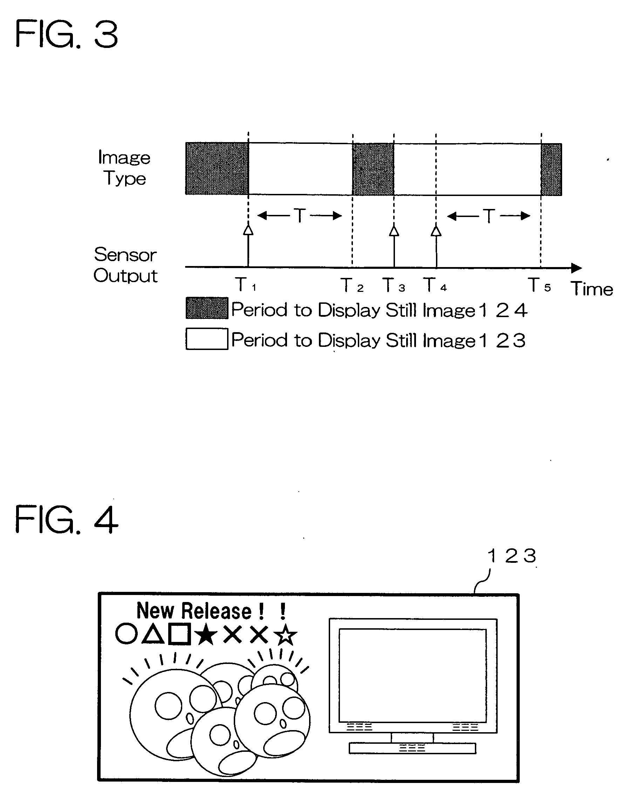

Next, with reference to FIG. 3, the operation of the image display system 10 having the above-mentioned structure will be explained. FIG. 3 is a schematic diagram showing image display timing in displaying a still image.

In FIG. 3, the human detection sensor 300 detects the presence of a person in the human detection area 300a at a time point T1. At this time, the CPU 111 selects one of the still image data 121 from the storage device 120, and stores it into the memory 112.

The display signal generation device 130 generates a display signal to be displayed on the display device 210, on the basis of the still image data 121 stored in the memory 112, and supplies it to the display device 210. The display device 210 displays a still image 123 as being one example of the "first image" of the present invention, on the basis of the supplied display signal.

Here, with reference to FIG. 4, the still image 123 will be explained. FIG. 4 is a schematic diagram showing the still image 123.

In FIG. 4, the still image 123 is a still image for publicity of some product, for example. The still image 123 is a clear image constructed with high visibility, so as to effectively give the publicity of the product to the person in the human detection area 300a.

Back in FIG. 3, if receiving a detection pulse signal for indicating that the presence of the person is detected, from the human detection sensor 300 at the time point T1, the CPU 111 activates a built-in timer and starts the measurement of an elapsed time length from the time point T1.

In the embodiment, the image display system 10 continues displaying the still image 123 on the display device 210, until a time length T elapses from the detection time point, in detecting the presence of a person.

At a time point T2 when the time length T elapses from the time point T1, the CPU 111 controls the display signal generation device 130, to thereby stop the supply of a display signal related to the still image 123 to the display device 210. At the same time, the CPU 111 also gives an instruction for generating a display signal related to still image 124 to be newly displayed on the display device 210, to the display signal generation device 130.

The still image 124 to be newly displayed on the display device 210 means an image which is displayed while there is no one in the human detection area 300a. Namely, in this period, it is considered that it is less effective to positively display an advertisement image, or the like. Therefore, in the embodiment, the still image 124 to be displayed in this period is one example of the "second image" of the present invention, which can reduce the power consumption of the image display system 10 more than a normal image does.

Incidentally, at the time point T2, it is not that there is certainly no one in the human detection area 300a. In some cases, there is someone in the human detection area 300a at the time point T2, who cannot be detected due to the malfunction of the human detection sensor 300 or the limit of detection accuracy. Therefore, the elapsed time length T is merely a value determined as an average time length of a person spending in the human detection area 300a, by an experimental, experiential or simulation method, or the like. Therefore, if the human detection sensor 300 can certainly detect the coming and going of a person in the human detection area 300a, the display content of the display device 210 may vary uncertainly, depending on the output signal of the human detection sensor 300, at each time of the detection.

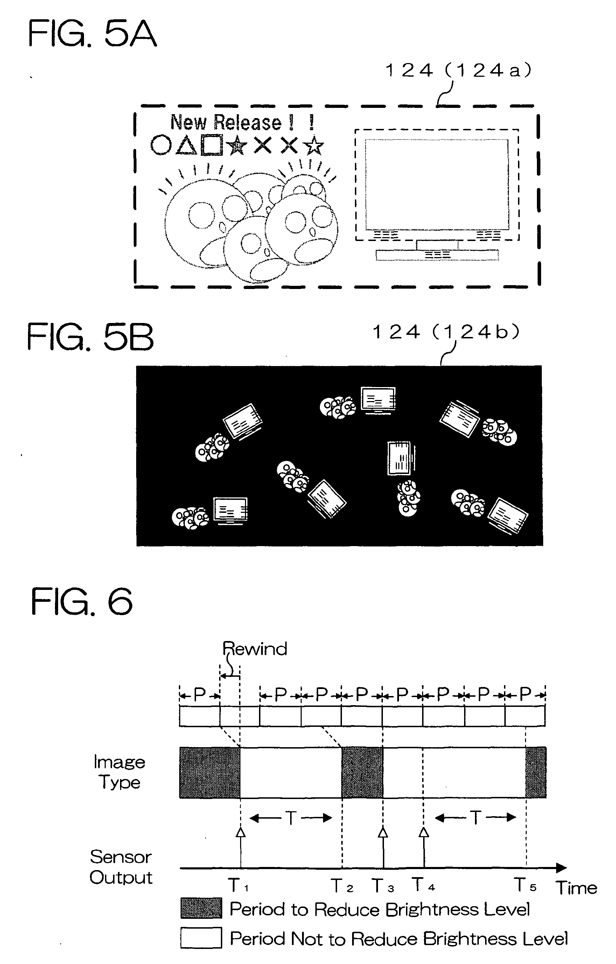

Here, with reference to FIG. 5A and FIG. 5B, the still image 124 will be explained. FIG. 5A and FIG. 5B are illustrations showing the still image 124.

The still image 124 may be a dark still image 124a in which the color of the still image is faded or dulled as a whole, as shown in FIG. 5A. The still image 124 may be a still image 124b in which a plurality of reduced still image 123 are sprinkled on a black screen, as shown in FIG. 5B. In the former case, the display signal generation device 130 refers to the still image data 121 stored in the memory 112, performs image processing so as to make the still image 124a darker than the still image 123, to thereby generate a display signal, and supplies it to the display device 210, to thereby obtain the still image 124a. In the latter case, for example, the display signal generation device 130 refers to the still image data 121 stored in the memory 112, performs image processing so as to reduce the size of the still image 123 as well as generating a display signal so as to place a plurality of them on the black screen, and supplies them to the display device 210, to thereby obtain the still image 124b.

All of the still images 124 (i.e. 124a and 124b) are set in advance to reduce the power consumption more than the still image 123 does. The still image 124 is not limited to these aspects, but may be arbitrarily set as long as a high advertising effect can be realized while reducing the power consumption. For example, the still image 124 may be an image which can reduce the power consumption of the image display system 10 more than the still image 123 does, an image which can reduce the deterioration of the display device 210 more than the still image 123 does, an image which has a high appeal to attract a person more than the still image 123, or the like.

Moreover, the display pattern of the still image 124 may be stored in advance in an internal memory of the CPU 111. By the instruction from the CPU 111, the display signal generation device 130 may generate a display signal. Incidentally, the still images 124a and 124b both can prevent a phenomenon which deteriorates the display device 210, such as the burn-in of a screen. Therefore, the image display system 10 can also prevent the deterioration of the display device 210 while reducing the power consumption. The effect of preventing the burn-in of a screen, as described above, is particularly good for a plasma display apparatus which relatively easily causes the burn-in of a screen.

Incidentally, the still image 124 may have different content from that of the still image 123. For example, single or a plurality of still image data 121 corresponding to the still image 124 may be stored in the storage device 120 in advance. In this case, the CPU 111 may select any one of the still image data 121, as occasion demands, and may store it into the memory 112. Moreover, as described above, even if the still image 124 has some relationship with the still image 123, the corresponding still image data 121 may be stored in the storage device 120 in advance.

Back in FIG. 3 again, a detection pulse signal from the human detection sensor 300 is outputted to the CPU 111 again, at a time point T3. In this case, in the same manner as the operation at the above-mentioned time point T1, the still image 123 is displayed on the display device 210. In this case, the CPU 111 may temporarily store the display signal related to the still image 123, which is displayed in advance, into the memory 112, and may merely read it from the memory 112 at the time point T3 to supply it to the display device 210.

Here, it is assumed that the presence of a person is detected again at a time point T4 when the time length T has not elapsed yet from the time point T3. In this case, the image display system 10 continues displaying the still image 123 on the display device 210 until a time point T5 when the time length T elapses from the time point T4. At the time point T5, the display content of the display device 210 is changed to the still image 124 again. As described above, the image display system 10 displays the still image 123 until the time length T elapses from a time point when the human detection sensor 300 detects the presence of the person at last. The image display system 10 allows the person in the human detection area 300a to visually recognize the image data 123, certainly.

### <B: Display of Motion picture>

The image displayed for the passer-by 20 is not limited to the still image. For example, as for the publicity of products, a motion picture, such as TVCM (Television Commercial), may be better in the advertising effect and a visual effect, in some cases. With reference to FIG. 6, the operation of the image display system 10 in the case where a motion picture is displayed on the display device 210 will be explained. FIG. 6 is a schematic diagram showing image display timing in displaying the motion picture. In FIG. 6, the same parts as those in FIG. 3 carry the same reference numerals and the detailed explanations of them are omitted.

In FIG. 6, the image display system 10 always allows the display device 210 to display the motion picture. Specifically, the CPU 111 stores the motion picture data 122 which will be stored in the storage device 120, into the memory 112.

The CPU 111 controls the display signal generation device 130, to thereby generate a display signal related to the motion picture to be displayed on the display device 210, from the motion picture data 122 stored in the memory 112. The display device 210 displays the motion picture on the basis of an image signal related to the motion picture, which is supplied from the display signal generation device 130.

In this motion picture, 1 (one) span is a time length P (<T) (e.g. several tens seconds). The CPU 111 controls the display device 210 and the display signal generation device 130 to display the motion picture from the beginning again if the motion picture is displayed until the end. Namely, the CPU 111 controls them to repeatedly display the motion picture on the display device 210.

Now, it is assumed that the presence of a person is detected at the time point T1, as in FIG. 3. At the time point T1, the motion picture is being displayed in the middle of the 1 span. If nothing is performed, the passer-by 20 will watch the motion picture from the middle of content, which may reduce the advertising effect. Thus, the CPU 111 controls the display device 210 and the display signal generation device 130 to find the beginning of the motion picture and display the motion picture from the beginning of 1 span at the time point T1 (which is expressed by "rewind" in FIG. 6, for convenience).

Then, at the time point T2 when the time length T elapses from the time point T1, the CPU 111 outputs a brightness control signal for reducing the brightness of the display device 210, to the brightness control interface (I/F) 220 of the display apparatus 200.

The display device 200 reduces the brightness level of the display device 210 to a predetermined brightness level, on the basis of the brightness control signal received through the brightness control interface (I/F) 220. The motion picture displayed on the display device 210 whose brightness level is reduced in this manner becomes darker than the original picture, as in FIG. 5A, and has the reduction effect of the power consumption, as in the case of the still image.

If the presence of a person is detected again at the time point T3, the CPU 111 supplies a brightness control signal to the brightness control interface (I/F) 220, to return the brightness level of the display screen to the original state again. Incidentally, at the time point T3, the display of 1 span has just completed in the motion picture, and the CPU 111 controls only the brightness level of the display device 210. If the presence of a person is detected again at the time point T4, the CPU 111 extends the display period of the motion picture having the normal brightness level, as in the case of the still image. Then, the CPU 111 performs reduction processing of reducing the brightness level again at the time point T5.

As explained above, in the image display system 10, some type of image is always displayed on the display device 210, regardless of whether or not there is someone in the human detection area 300a. Therefore, if the presence of a person is detected in the human detection area 300a, it is possible to quickly change the image, to the one in which it is desired to allow the passer-by 20 to visually recognize it in a normal situation. Thus, it is possible to realize the high advertising effect while reducing the power consumption.

Moreover, according to the image display system 10, some type of image is always displayed on the display device 210. By this, it is possible to transmit the fact that there is an advertising image, to even those who are out of the human detection area 300a, for example. For example, it is conceivable that an unspecified person founds the display device 210 from a distance, and enters the human detection area 300a to make sure what is displayed. Namely, the image display system 10 has an extremely high attractive effect.

Incidentally, the brightness level of the display device 210 may be controlled when the still image is displayed. When the motion picture is displayed, the display signal related to the motion picture for reducing the power consumption may be generated and displayed on the display device 210.

### <Modified Examples>

The structure of the image display system 10 of the present invention is not limited to the above-mentioned embodiment. For example, it can adopt the following aspects.

### <First Modified Example>

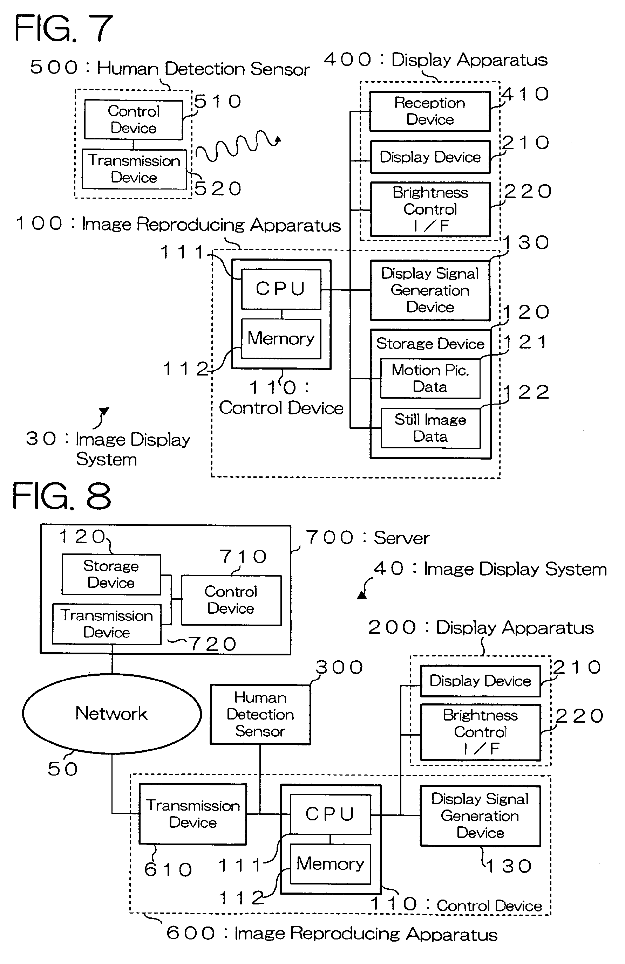

At first, with reference to FIG. 7, an image display system in the first modified example of the present invention will be explained. FIG. 7 is a block diagram showing an image display system 30. In FIG. 7, the same parts as those in FIG. 2 carry the same reference numerals and the detailed explanations of them are omitted.

The image display system 30 is provided with: the image reproducing apparatus 100; a display apparatus 400; and a human detection sensor 500.

The display apparatus 400 is further provided with a reception device 410 for receiving a brightness control signal, as described later, which is different from the display apparatus 200 in the above-mentioned embodiment.

The human detection sensor 500 is provided with: a control device 510; and a transmission device 520, and is mounted separately from the image reproducing apparatus 100 and the display apparatus 400.

The control device 510 is a unit for controlling the operation of the human detection sensor 500, and has a not-illustrated built-in timer. The transmission device 520 can transmit a brightness control signal generated by the control device 510, to the display apparatus 400, by using infrared rays or the like.

The operation of the image display system 30 is basically the same as in the above-mentioned embodiment. However, the CPU 111 of the image reproducing apparatus 100 always allows the display device 210 to display the still image 123. Here, the control device 510 of the human detection sensor 500 always manages a time point, by using the built-in timer. The control device 510 generates a brightness control signal to reduce the brightness of the display device 210 of the display apparatus 400 at the time points T2 and T5 in FIG. 3, and transmits it from the transmission device 520.

This transmitted brightness control signal is received by the reception device 410 of the display apparatus 400, and supplied to the brightness control interface (I/F) 220. The brightness control signal inputted through the brightness control interface (I/F) 220 causes the brightness of the display device 210 to be reduced, as in the embodiment. This realizes the reduction of the power consumption and the prevention of the deterioration of the display device 210. Namely, in the first modified example, the human detection sensor 500 functions as another example of the "display controlling device" of the present invention. According to the first modified example, the human detection sensor 500 is not necessarily mounted in the same place as the image reproducing apparatus 100 or the display apparatus 400. This increases the setting efficiency of the image display system 30.

### <Second Modified Example>

Next, with reference to FIG. 8, an image display system in the second modified example of the present invention will be explained. FIG. 8 is a block diagram showing an image display system 40. In FIG. 8, the same parts as those in FIG. 2 carry the same reference numerals and the detailed explanations of them are omitted.

In the image display system 40, an image reproducing apparatus 600, which is connected to the display apparatus 200 and the human detection sensor 300, and a server 700 are accommodated or included in a network 50.

The network 50 is one example of the "network" of the present invention, including a mobile communication network and a cable communication network. For example, the network 50 includes various lines, such as an ADSL (Asymmetric Digital Subscriber Line), an optical fiber, and a phone line, and a base station and an access point corresponding to the various lines.

The image reproducing apparatus 600 has a communication device 610, instead of the storage device 120, which is different from the image reproducing apparatus 100 in the embodiment. The image reproducing apparatus 600 is one example of the "client" of the present invention. The image reproducing apparatus 600 can communicate with the server 700 through the communication device 610.

The server 700 is provided with: a control device 710; the storage device 120; and a communication device 720. The server 700 functions as one example of the "server" of the present invention.

The control device 710 is a unit for controlling the operation of the server 700. The communication device 720 can communicate with the image reproducing apparatus 600, in accordance with the control by the control device 710.

In operation of the image display system 40, the control device 710 of the server 700 supplies the still image data 121 or the motion picture data 122, which is stored in the storage device 120, to the image reproducing apparatus 600 through the communication device 720.

The image reproducing apparatus 600 receives the still image data or the motion picture data, which is supplied from the server 700, through the communication device 610. The received data is stored into the memory 112 by the CPU 111, and a display image signal is generated by the display signal generation device 130. An image based on the display image signal is displayed on the display device 210.

Namely, in the second modified example, it is possible to simplify the structure of the image reproducing apparatus 600, by providing the storage device 120 for the server 700 which can mutually communicate with the image reproducing apparatus 600 through the network 50. Moreover, a relatively large capacity storage medium can be used for the storage device 120 provided for the server 700, so that it is possible to prepare a large variety of images to be displayed on the display device 210. The structure of the image display system 40 is the same as that of a remote control advertisement display system, which is represented by a Remote Cast Broad Band (RCBB: registered trade mark) or the like, for example. It is also possible to use this type of infrastructure.

In the image display system 40, it is also possible to transmit a detection pulse signal as being the detection result of the human detection sensor 300, to the server 700 through the network 50. As described above, when the detection result of the human detection sensor 300 is transmitted in real time to the server 700, this detection result is accumulated on a storage medium, such as a hard disk which is one example of the "second storing device" of the present invention, on the server 700 side. On the server 700 side, the presence state of a person around the display apparatus 200 can be recognized on the basis of the accumulated detection result. This facilitates the estimation or analysis of the setting effect of the image display system 40. Moreover, on the basis of the estimation or analysis, it is also possible to optimize the type or the like of the image data which is supplied to the image reproducing apparatus 600. However, the detection result of the human detection sensor 300 is not necessarily transmitted in real time, by using the network 50, as described above. For example, a certain amount of detection results may be accumulated in the memory 112 of the image reproducing apparatus 600 so as to refer to it later.

## Claims

1. An image display system (10) **characterized in that** said image display system comprises:
a displaying device (100, 200) which has a display screen (210);
a detecting device (300) for detecting presence of a person in a portion around said displaying device; and
a display controlling device (111) for controlling said display device so as to display a first image (123) on the display screen only for a predetermined display period if the presence of the person is detected by said detecting device, and to display a second image (124), which is different from the first image, on the display screen in at least one portion of period other than the predetermined display period.

2. The image display system (10) according to claim 1, **characterized in that**
said displaying device (100, 200) includes:
an image signal generating device (130) for generating an image signal; and
a display screen device (200), which has the display screen (210), for displaying the first or second image (123, 124) on the display screen, on the basis of the generated image signal,
said display controlling device (111) controls at least one of said image signal generating device and said display screen device to display the second image in the at least one portion of period.

3. The image display system (10) according to claim 1 or 2, **characterized in that** the second image (124) is an image in which power consumption is less than the first image (123).

4. The image display system (10) according to any one of claims 1 to 3, **characterized in that** the second image (124) is an image which causes less deterioration of the display screen (210) than the first image (123) does.

5. The image display system (10) according to claim 4, **characterized in that** said display controlling device (111) controls said display device (100, 200) to reduce brightness of the display screen (210) when the second image (124) is displayed.

6. The image display system (10) according to any one of claims 1 to 5, **characterized in that** the second image (124) has a higher attractive effect of attracting the person than the first image (123).

7. The image display system (10) according to any one of claims 1 to 6, **characterized in that** said display controlling device (111) extends the predetermined display period if the presence of a person is newly detected by said detecting device (300) in the predetermined display period.

8. The image display system (10) according to claim 2, **characterized in that**
said image display system further comprises a first storing device for storing image data related to the image signal in advance, and
said image signal generating device (130) generates the image signal on the basis of the image data stored in advance.

9. The image display system (10) according to any one of claims 1 to 8, **characterized in that** said image display system further comprises a second storing device (120) for storing a detection result of said detecting device (300).

10. The image display system (10) according to claims 8, **characterized in that**
said first storing device (120) is accommodated in a network (50) and mounted in a server (700) which can be communicated through the network,
said image signal generating device (130) is accommodated in the network and is mounted in a client (600) which can be communicated with the server through the network,
the server transmits the stored image data through the network,
the client receives the transmitted image data, and
said image signal generating device generates the image signal on the basis of the received image data.

11. The image display system (10) according to claims 9, **characterized in that**
said second storing device (120) is accommodated in the network (50) and is mounted in the server (700) which can be communicated through the network,
said detecting device (300) is accommodated in the network and is mounted in the client (600) which can be communicated with the server through the network,
the client transmits the detection result through the network,
the server receives the transmitted detection result, and
said second storing device stores therein the received detection result.

12. An image display method **characterized in that** said image display method comprises:
a detecting process of detecting presence of a person in a portion around a displaying device (100, 200) having a display screen (210);
a first controlling process of controlling said display device so as to display a first image (123) on the display screen only for a predetermined display period if the presence of the person is detected by said detecting process; and
a second controlling process of controlling said display device so as to display a second image (124), which is different from the first image, on the display screen in at least one portion of period other than the predetermined display period.
